# EUROPÄISCHE PATENTSCHRIFT

(11) **EP 3 583 156 B1**
(45) Veröffentlichungstag und Bekanntmachung des Hinweises auf die Patenterteilung: **22.07.2020**
(21) Anmeldenummer: 18703547.2
(22) Anmeldetag: 31.01.2018
(51) Int. Cl.: C08G 77/388

(54) **VERFAHREN ZUR HERSTELLUNG HARNSTOFFFUNKTIONELLER SILOXANE**
METHOD FOR PREPARING UREA-FUNCTIONAL SILOXANES
PROCÉDÉ DE FABRICATION DE SILOXANES À GROUPES FONCTIONNELS D'URÉE

(43) Veröffentlichungstag der Anmeldung: 25.12.2019
(73) Patentinhaber: Wacker Chemie AG, 81737 München (DE)
(72) Erfinder: STEPP, Michael, 5123 Überackern (DE); PESCHANEL, Birgit, 84489 Burghausen (DE)
(74) Vertreter: Deffner-Lehner, Maria
(86) Internationale Anmeldenummer: PCT/EP2018/052431
(87) Internationale Veröffentlichungsnummer: WO 2019/149355

(56) Entgegenhaltungen:
- US-A- 3 754 971
- US-A- 4 046 794

## Beschreibung

Die Erfindung betrifft ein Verfahren zur Herstellung von harnstofffunktionellen Organopolysiloxanen mit NH₂-C(O)-N-Resten.

Siloxane mit polaren Harnstoff-Funktionen reagieren im Gegensatz zu aminofunktionellen Siloxanen in wässriger Umgebung neutral und sind deshalb als oberflächenaktive oder hydrophilisierende Substanzen in physiologischer Umgebung z.B. als Bestandteil von Kosmetika von Interesse. Die extrem polare Harnstoff-Gruppe ist in der Lage, starke Wasserstoffbrücken auszubilden, weshalb entsprechend funktionalisierte (Poly)Siloxane im Gegensatz zu den analogen aminofunktionellen Vertretern eine stärkere Wechselwirkung mit Oberflächen und damit eine höhere Permanenz als Additive ermöglichen.

Aufgrund der hohen Polarität der Harnstofffunktion ist ihre Einführung in das gering polare Siloxan-Gerüst aus polaren Vorstufen wie Harnstoff, wie in US3772351 beschrieben, erschwert bis unmöglich. Auch der Umweg über die basisch katalysierte Äquilibrierung eines harnstoff-funktionellen Alkoxysilans mit Siloxanen ist aufgrund der Instabilität der Harnstofffunktion gegenüber Basen kein gangbarer Weg.

Die Reaktion von primären Aminen mit Carbaminsäurephenylester in Gegenwart von Triethylamin wurde von Kim, J.-U. et al., Journal of Colloid and Interface Sci. 357, 428-433 (2010) beschrieben. Dabei wird die -(C=O)-NH₂-Gruppe unter Abspaltung von Phenol auf die primäre oder sekundäre Aminfunktion übertragen. Für Polysiloxane und Silane ist die analoge Reaktion (ohne Einsatz von Aminen als Hilfsstoffe) prinzipiell in US 4,046,794 A der Union Carbide Co. aus den späten 1960er Jahren beschrieben, ebenso die Verwendung der Polymere als Haftvermittler zwischen organischen und anorganischen Substraten insbesondere für Glasfaser/Kunststoff-Verbünde. Allerdings basieren die angeführten Beispiele ausschließlich auf Umsetzungen von Aminoalkyl*silanen* mit Carbaminsäure*alkyl*estern (z.B. dem toxischen O-Ethylcarbamat), die deutlich reaktionsträger sind und zinnhaltige Katalysatoren für eine akzeptable Reaktionsgeschwindigkeit benötigen.

US3754971 A offenbart die Umsetzung von Aminoalkylsilanen mit Carbaminsäurealkylestern, unter welchen Phenylcarbamat ausdrücklich genannt ist.

Die direkte Umsetzung von aminofunktionellen Polysiloxanen mit Carbaminsäurephenylester liefert zwar die gewünschten harnstofffunktionellen Polysiloxane, hat dabei jedoch den Nachteil, dass deutliche Anteile an Phenoxy-Si-Resten auftreten, die bei der späteren Anwendung durch Hydrolyse toxisches Phenol (KMR2-Stoff (KMR = krebserzeugend, mutagen und reproduktionstoxisch), H341 "kann vermutlich genetische Defekte verursachen") freisetzen können.

Es bestand daher die Aufgabe, ein Verfahren zur Herstellung von Harnstoff-funktionellen Organopolysiloxanen bereitzustellen, das einfach durchführbar ist, bei dem die oben genannten Nachteile vermieden werden und bei dem keine toxischen Nebenprodukte entstehen.

Gegenstand der Erfindung ist ein Verfahren zur Herstellung von harnstofffunktionellen Organopolysiloxanen aus Einheiten der Formel (I)

**RₙSiO_{(4-n)/2}** (I)

wobei
- **R**: einen Rest **R¹** oder einen Rest **-OR²** oder einen Rest **Q** bedeutet, wobei
- **R¹**: einen einwertigen gegebenenfalls halogenierten Kohlenwasserstoffrest mit 1 bis 18 C-Atomen bedeutet,
- **R²**: ein Wasserstoffatom oder einen einwertigen C₁-C₆-Kohlenwasserstoffrest bedeutet,
- **Q**: ein harnstofffunktioneller Rest der Formel (II) ist

**-R⁵-[NR⁴-R⁶-]ₓNR⁴R³** (II),

wobei
- **R³**: ein Wasserstoffatom oder einen einwertigen C₁-C₆-Kohlenwasserstoffrest, vorzugsweise ein Wasserstoffatom, bedeutet,
- **R⁴**: gleich oder verschieden ist und einen Rest **R⁴'** oder einen Rest **R^{u}** bedeutet, wobei
- **R⁴'**: ein Wasserstoffatom oder einen einwertigen C₁-C₆-Kohlenwasserstoffrest bedeutet,
- **R^{u}**: ein Rest der Formel (III) ist

**-C(=O)-NH₂** (III)

- **R⁵**: einen zweiwertiger C₁-C₁₈-Kohlenwasserstoffrest, vorzugsweise einen zweiwertiger C₂-C₄-Kohlenwasserstoffrest, bedeutet,
- **R⁶**: einen zweiwertiger C₁-C₁₈-Kohlenwasserstoffrest, vorzugsweise einen zweiwertiger C₂-C₄-Kohlenwasserstoffrest, bedeutet,
- **x**: 0, 1 oder 2 ist und
- **n**: 0, 1, 2 oder 3 ist und vorzugsweise durchschnittlich 2,00 bis 2,66 ist,
mit der Maßgabe, dass in den Organopolysiloxanen aus Einheiten der Formel (I) mindestens ein harnstofffunktioneller Rest **Q**, der einen Rest **R^{u}** aufweist, pro Molekül enthalten ist,
indem aminofunktionelle Organopolysiloxane aus Einheiten der Formel (IV)

**R'ₙSiO_{(4-n)/2}** (IV),

wobei
- **R'**: einen Rest **R¹** oder einen Rest **-OR²** oder einen Rest **A** bedeutet, wobei
- **R¹, R²** und **n**: die oben dafür angegebene Bedeutung haben und
- **A**: ein aminofunktioneller Rest der Formel (V) ist

**-R⁵-[NR⁴'-R⁶-]ₓNR⁴'R³** (V),

wobei
**R³, R⁴', R⁵, R⁶** und **x** die oben dafür angegebene Bedeutung haben, mit der Maßgabe, dass in den Organopolysiloxanen aus Einheiten der Formel (IV) mindestens ein aminofunktioneller Rest **A** pro Molekül enthalten ist,
mit ortho-substituierten Carbaminsäurearylestern der Formel (VI)

**R⁷-Ar-O-C(=O)-NH₂** (VI),

wobei
- **Ar**: einen ortho-substituierten Arylrest, vorzugsweise einen ortho-substituierten Phenylrest, bedeutet, wobei Ar neben dem ortho-Substituent **R⁷** noch weitere Substituenten in ortho'-, meta- oder para-Position enthalten kann, und
- **R⁷**: der an Ar gebundene ortho-Substituent ist, wobei **R⁷** einen C₁-C₆-Alkylrest, einen C₁-C₆-Carboxalkylrest, einen C₁-C₆-Alkoxyrest oder einen Halogenrest bedeutet,
umgesetzt werden.

Beim erfindungsgemäßen Verfahren wird R⁷-Ar-OH, wobei Ar und R⁷ die oben dafür angegebene Bedeutung haben, vorzugsweise bei Einsatz eines ortho-substituierten Carbaminsäurephenylesters ein ortho-substituiertes Phenol, abgespalten.

Überraschend wurde gefunden, dass durch den Ersatz des Phenylrestes im Carbaminsäurephenylester durch orthosubstituierte Phenylreste die Entstehung von unerwünschten Si-O-gebundenen Phenylresten im harnstofffunktionellen Organopolysiloxan verhindert werden kann. Ein weiterer Vorteil des erfindungsgemäßen Verfahrens ist die in der Regel niedrigere Schmelztemperatur der freigesetzten ortho-substituierten Phenole. Da sie bei Raumtemperatur zumeist flüssig sind, lassen sie sich leichter aus dem Dampf kondensieren und für ein Recycling zurückgewinnen. Außerdem sind viele dieser Verbindungen weit weniger gesundheitsschädlich eingestuft als Phenol, was den Umgang mit ihnen im betrieblichen Umfeld erleichtert. Der Verbleib von Spuren dieser Phenole im Endprodukt ist deshalb auch weniger kritisch.

Bei den erfindungsgemäßen Organopolysiloxanen aus Einheiten der Formel (I) bedeuten vorzugsweise
mindestens 50 % aller Reste **R** einen C₁-C₆-Alkylrest **R¹**, mindestens 0,1 % aller Reste **R** einen Rest **Q** der Formel (II), wobei in mindestens einem Rest **Q** mindestens ein Rest **R⁴** die Bedeutung von **R^{u}** hat und
höchstens 3 % aller Reste **R** einen Rest **-OR²**,
wobei Q, R, R¹, R², R⁴ und R^{u} die oben dafür angegebene Bedeutung haben.

Die Organopolysiloxane aus Einheiten der Formel (I) können linear, cyclisch oder verzweigt sein und können oligomer oder polymer sein. Vorzugsweise enthalten sie mindestens 3 Si-Atome und höchstens 2000 Si-Atome, bevorzugt höchstens 600 Si-Atome.

Durch die Reaktion der Carbaminsäurearylester mit den Aminofunktionen in den Organopolysiloxanen aus Einheiten der Formel (IV) erfolgt vorzugsweise keine wesentliche Veränderung des Siloxangerüsts.

In den bei dem erfindungsgemäßen Verfahren eingesetzten aminofunktionellen Organopolysiloxanen aus Einheiten der Formel (IV) bedeuten vorzugsweise
mindestens 50 % aller Reste **R** einen C₁-C₆-Alkylrest **R¹**, mindestens 0,1 % aller Reste **R** einen Rest **A** der Formel (V) und höchstens 3 % aller Reste **R** einen Rest **-OR²**,
wobei A, R, R¹ und R² die oben dafür angegebene Bedeutung haben.

Die Organopolysiloxane aus Einheiten der Formel (IV) können linear, cyclisch oder verzweigt sein und können oligomer oder polymer sein. Vorzugsweise enthalten sie mindestens 3 Si-Atome und höchstens 2000 Si-Atome, bevorzugt höchstens 600 Si-Atome.

Beispiele für Kohlenwasserstoffreste **R¹** sind Alkylreste wie der Methyl-, Ethyl-, n-Propyl-, iso-Propyl-, n-Butyl-, 2-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, und Decylreste, wie der n-Decylrest; Cycloalkylreste, wie der Cyclopentyl-, Cyclohexyl-, 4-Ethylcyclohexyl- und Cycloheptylreste, Norbornylreste und Methylcyclohexylreste; Alkenylreste, wie der Vinyl-, 2-Propen-2-yl-, Allyl-, 3-Buten-1-yl-, 5-Hexen-1-yl- und 10-Undecen-1-yl-rest; Cycloalkenylreste, wie der 2-Cyclohexenyl-, 3-Cyclohexenyl-, Cyclopentadienyl-, und 2-(Cyclohex-3-en-1-yl)ethylrest Arylreste, wie der Phenyl-, Biphenylyl-, Naphthylrest; Alkarylreste, wie o-, m-, p-Tolylreste und Phenylethylreste, wie der 2-Phenylethyl- und 1-Phenylethylrest und Aralkylreste, wie der Benzylrest.

Wenn **R¹** ein halogenierter Kohlenwasserstoffrest ist, sind die Halogenreste an **R¹** vorzugsweise Fluorreste.

Beispiele für halogenierte Kohlenwasserstoffreste **R¹** sind der 3,3,3-Trifluorpropyl- und 5,5,5,4,4,3,3-Heptafluorpentylrest.

Vorzugsweise weisen die Reste **R¹** 1 bis 6 C-Atome, bevorzugt 1 bis 4 C-Atome auf. Besonders bevorzugt ist **R¹** ein Methylrest. Falls **R¹** ein ungesättigter Rest ist, ist der Vinylrest bevorzugt.

Beispiele für die Kohlenwasserstoffreste **R²**, **R³** oder **R^{4'}** mit 1 bis 6 C-Atomen sind bei den Beispielen für **R¹** aufgeführt. Bevorzugte Kohlenwasserstoffreste sind jeweils Ethyl- und Methylreste.

Vorzugsweise ist **R³** ein Wasserstoffatom.

Beispiele für Reste **R⁵** sind Reste der Formel

-CH₂-, -CH₂-CH₂-, -CH₂-CH₂-CH₂- und -CH₂-CH(CH₃)-CH₂-.

Beispiele für Reste **R⁶** sind Reste der Formel

-CH₂-CH₂- und -CH₂-CH₂-CH₂-.

Beispiele Für Reste **R⁷** sind der Methyl-, Ethyl-, Propyl-, Isopropyl-, Methoxy-, Ethoxy-, Carboxyethyl-, Carboxymethyl-, Fluor-, Chlor- und Bromrest.

Bevorzugte aminofunktionelle Reste **A** der Formel (V) sind Reste der Formel

-CH₂-CH₂-CH₂-NH₂

und

-CH₂-CH₂-CH₂-NH-CH₂-CH₂-NH₂.

Bevorzugte harnstofffunktionelle Reste **Q** der Formel (II) sind Reste der Formel

-CH₂-CH₂-CH₂-NH-C(=O)-NH₂,

-CH₂-CH₂-CH₂-NH-CH₂-CH₂-NH-C(=O)-NH₂,

-CH₂-CH₂-CH₂-N[-C(=O)-NH₂]-CH₂-CH₂-NH-C(=O)-NH₂

und

-CH₂-CH₂-CH₂-N[-C(=O)-NH₂]-CH₂-CH₂-NH₂.

Die Organopolysiloxane aus Einheiten der Formel (I) sind bevorzugt Organopolysiloxane der Formel (VII)

QₖR*₃₋ₖSiO(R¹₂SiO)ₘ(QR*SiO)ₚSiR*₃₋ₖQₖ (VII)

wobei
**R*** einen Rest **R¹** oder einen Rest **-OR²** bedeutet,
**R¹** und **R²** die oben dafür angegebene Bedeutung haben,
**Q** ein harnstofffunktioneller Rest der Formel (II) ist

**-R⁵-[NR⁴-R⁶-]ₓNR⁴R³** (II),

wobei
- **R³**: ein Wasserstoffatom oder einen einwertigen C₁-C₆-Kohlenwasserstoffrest, vorzugsweise ein Wasserstoffatom, bedeutet,
- **R⁴**: gleich oder verschieden ist und einen Rest **R⁴'** oder einen Rest **R^{u}** bedeutet, wobei
- **R⁴'**: ein Wasserstoffatom oder einen einwertigen C₁-C₆-Kohlenwasserstoffrest bedeutet und
- **R^{u}**: ein Rest der Formel (III) ist

**-C(=O)-NH₂** (III),

- **R⁵**: einen zweiwertiger C₁-C₁₈-Kohlenwasserstoffrest, vorzugsweise einen zweiwertigen C₂-C₄-Kohlenwasserstoffrest, bedeutet,
- **R⁶**: einen zweiwertigen C₁-C₁₈-Kohlenwasserstoffrest, vorzugsweise einen zweiwertigen C₂-C₄-Kohlenwasserstoffrest, bedeutet,
- **k**: 0 oder 1 ist,
- **m**: 0 oder eine ganze Zahl von 1 bis 1000 ist,
- **p**: 0 oder eine ganze Zahl von 1 bis 50 ist und
- **x**: 0, 1 oder 2 ist,
mit der Maßgabe, dass in den Organopolysiloxanen der Formel (VII) mindestens ein harnstofffunktioneller Rest **Q**, der einen Rest **R^{u}** aufweist, pro Molekül enthalten ist.

Bei dem erfindungsgemäßen Verfahren werden als aminofunktionelle Organopolysiloxane aus Einheiten der Formel (IV) bevorzugt Organopolysiloxane der Formel (VIII)

AₗR*₃₋ₗSiO(R¹₂SiO)ₒ(AR*SiO)_{q}SiR*₃₋ₗAₗ (VIII)

eingesetzt, wobei
**R*** und **R¹** die oben dafür angegebene Bedeutung haben,
**A** ein aminofunktioneller Rest der Formel (V) ist

**-R⁵-[NR⁴'-R⁶-]ₓNR⁴'R³** (V),

wobei
**R³, R⁴', R⁵, R⁶** und **x** die oben dafür angegebene Bedeutung haben,
**l** 0 oder 1 ist,
**o** 0 oder eine ganze Zahl von 1 bis 1000 ist,
**q** 0 oder eine ganze Zahl von 1 bis 50 ist
mit der Maßgabe, dass in den Organopolysiloxanen der Formel (VIII) mindestens ein aminofunktioneller Rest **A** pro Molekül enthalten ist.

Die aminofunktionellen Organopolysiloxane aus Einheiten der Formel (IV) und die aminofunktionellen Organopolysiloxane aus der Formel (VIII) können nach literaturbekannten Methoden hergestellt werden und sind zum Teil kommerziell erhältlich.

Die bei dem erfindungsgemäßen Verfahren eingesetzten orthosubstitutierten Carbaminsäurearylester der Formel (VI) können nach literaturbekannten Methoden hergestellt werden. Vorzugsweise erfolgt ihre Herstellung durch Umsetzung des jeweiligen ortho-substituierten Phenols mit Chlorsulfonylisocyanat und anschließender Hydrolyse gemäß Singh, R. et al., ACS Catalysis 6(10), 6520-6524 (2016). Die aus dem erfindungsgemäßen Verfahren zurückgewonnenen ortho-substituierten Phenole können somit wieder über diesen Prozess in das entsprechende Carbamat überführt und damit recycelt werden, was einen weiteren Vorteil des erfindungsgemäßen Verfahrens darstellt.

Als bevorzugte, weil kommerziell erhältliche, orthosubstituierte Phenole kommen bei dem erfindungsgemäßen Verfahren als Rohstoffe (und gleichzeitig Spaltprodukte) folgende in Frage:
2-Methylphenol (=o-Kresol),
2-(1-Methylethyl)-5-methylphenol (= Thymol),
2-Methyl-5-(1-methylethyl)-phenol (= Carvacrol),
2-Ethylphenol,
2-Methoxyphenol (= Guajacol),
2-Chlorphenol,
2-Hydroxybenzoesäuremethylester (= Methylsalicylat) und
2-Hydroxybenzoesäureethylester (= Ethylsalicylat).

Besonders bevorzugt sind 2-Methoxyphenol (= Guajacol) sowie 2-Methyl-5-(1-methylethyl)-phenol (= Carvacrol).

Bei dem erfindungsgemäßen Verfahren werden die beiden Reaktionspartner aminofunktionelles Organopolysiloxan und Carbaminsäurearylester durch Vermischen z.B. in einem Rührkessel, einem Kneter oder einem Rohrreaktor zur Reaktion gebracht. Eine gute Vermischung ist von Vorteil weil die Carbaminsäurearylester unter den Reaktionsbedingungen vorzugsweise als Feststoff vorliegen, während die aminofunktionellen Organopolysiloxane flüssig sind. Vorzugsweise wird das Spaltprodukt (= ortho-substituiertes Phenol) während der Umsetzung bereits entfernt, um das Reaktionsgleichgewicht in Richtung Zielprodukt zu verschieben. Dies geschieht besonders bevorzugt durch Verminderung des Drucks. Die Reaktionstemperatur wird dabei gerade so hoch gewählt, dass die gewünschte Reaktion möglichst rasch abläuft, unerwünschte Nebenreaktionen (wie z.B. Kondensation unter Biuretbildung) jedoch noch weitgehend vermieden werden und der Carbaminsäurearylester in der Reaktionsmischung verbleibt.

Das erfindungsgemäße Verfahren wird daher vorzugsweise bei einer Temperatur von höchstens 140°C, bevorzugt höchstens 120°C, insbesondere höchstens 100°C, und bei einer Temperatur von vorzugsweise mindestens 60°C, bevorzugt mindestens 80°C, durchgeführt.

Um eine hohe Raum-Zeit-Ausbeute bei niedriger Reaktionstemperatur zu erzielen, wird vorzugsweise bei möglichst niedrigem Druck umgesetzt, bevorzugt bei kleiner gleich 100 hPa, besonders bevorzugt bei kleiner gleich 10 hPa.

Die Entfernung des Spaltprodukts aus der Reaktionsmischung kann durch zusätzliches Durchleiten eines Inertgases wie Stickstoff oder Wasserdampf begünstigt werden.

Da die Umsetzung des Carbaminsäurearylesters der Formel (VI) mit den Aminogruppen des Organopolysiloxans aus Einheiten der Formel (IV) oder der Formel (VIII) quantitativ verläuft, kann das Molverhältnis an den gewünschten Umsetzungsgrad der Aminogruppen angepasst werden. Soll ein vollständiger Umsatz der vorhandenen primären und/oder sekundären Aminogruppen **A** in den Organopolysiloxanen aus Einheiten der Formel (IV) oder der Formel (VIII) erzielt werden, so beträgt das Molverhältnis Aminogruppe : Carbaminsäurearylester vorzugsweise 1 : 1. Zum Ausgleich von Mess- bzw. Kalkulationsfehlern bei der Amingehaltsbestimmung und der Reinheitsbestimmung des Carbaminsäurearylesters ist ein Überschuss Carbaminsäurearylester von vorzugsweise höchstens 20%, bevorzugt höchstens 10%, bezüglich der Aminogruppen dabei besonders bevorzugt.

Sollen jedoch beispielsweise nur 50% der Aminogruppen in Harnstoffgruppen umgewandelt werden, so reicht es aus, die Stoffmenge des eingesetzten Carbaminsäurearylesters auf 50% zu reduzieren.

Bei dem erfindungsgemäßen Verfahren beträgt daher die Menge an eingesetztem Carbaminsäurearylester vorzugsweise mindestens 0,5 Mol, bevorzugt mindestens 1 Mol, und vorzugsweise höchstens 1,2 Mol, bevorzugt 1,1 Mol, jeweils pro Mol Aminogruppe in den Organopolysiloxanen aus Einheiten der Formel (IV) oder der Formel (VIII).

Ein inertes Lösungsmittel kann zur Verbesserung der Mischbarkeit und damit zur Beschleunigung der Reaktion in dem erfindungsgemäßen Verfahren eingesetzt werden. Sein Siedepunkt ist vorzugsweise so hoch, dass es unter den Reaktionsbedingungen nicht verdampft. Es können auch Lösungsmittelgemische eingesetzt werden. Beispiele für geeignete Lösungsmittel sind hochsiedende Ether wie Diphenylether und lineare oder verzweigte gesättigte Paraffine sowie aromatische ggf. alkylsubstituierte Kohlenwasserstoffe.

Der Umsetzungsgrad lässt sich bei dem erfindungsgemäßen Verfahren leicht durch Wiegen oder Volumenbestimmung des abgetrennten Spaltprodukts (=ortho-substituiertes Phenol) ermitteln. Es können aber auch spektroskopische Methoden (insbesondere IR- und ¹H-NMR-Spektroskopie, ggf. inline) eingesetzt werden. Zur vollständigen Entfernung des restlichen Spaltprodukts kann das Rohprodukt bei - gegenüber Reaktionstemperatur - gleicher Temperatur, vorzugsweise um mindestens 10°C, besonders bevorzugt mindestens 20°C höherer Temperatur und/oder geringerem Druck ausgeheizt werden. Dies kann im Reaktionsgefäß erfolgen oder vorzugsweise weil schonender an einem Fallfilmverdampfer, einem Dünnschichtverdampfer oder einer Kurzwegdestillation ggf. unter zusätzlichem Durchleiten von Wasserdampf oder einem inerten Gas wie Stickstoff. Zur Verbesserung der Fließfähigkeit kann ein inertes Lösungsmittel zugesetzt werden, das sich destillativ leicht abtrennen lässt. Beispiele für solche Lösungsmittel sind Alkohole, wie Methanol, Ethanol, Isopropanol und n-Butanol, Ether, wie Tetrahydrofuran, 2-Methyl-tetrahydrofuran, Methyl-tert-butylether und Dibutylether, lineare oder verzweigte Paraffine und aromatische Kohlenwasserstoffe, wie Toluol oder Xylole.

Die erfindungsgemäßen harnstofffunktionellen Organopolysiloxane weisen die besondere Eigenschaft auf, dass bei steigender Temperatur ihre Viskosität deutlich stärker fällt, als die vergleichbarer Dimethylpolysiloxane, d.h. der Viskositäts/Temperatur-Koeffizient ist höher. Er steigt mit zunehmendem Harnstoffgehalt deutlich an

### Vergleichsbeispiel 1 (nicht erfindungsgemäß, analog US 3,772,351 A, Beispiel 3):

In einem 250ml-4-Halskolben mit magnetgekoppeltem Rührer, Thermofühler und Destillationsbrücke wurden 60 g (= 0,069 mol Amin) eines aminopropyl-funktionellen Polysiloxans der mittleren Formel ViSiMe₂O_{1/2} : Me₂SiO_{2/2} : MeSi (CH₂CH₂CH₂NH₂) O_{2/2} = 2 : 29,8 : 3,2 (Vi=Vinylrest, Me=Methylrest) vorgelegt und 20,7 g (= 0,344 mol) Harnstoff (98%, Merck) zugefügt. Die Suspension wurde unter Rühren und permanentem Einleiten von 5 l/h Stickstoff auf 130°C erhitzt. Dabei trennte sich eine flüssige untere Phase an geschmolzenem Harnstoff vom Siloxan ab. Die weiße Emulsion wurde 3h bei 130°C unter Einleiten von Stickstoff gerührt. Die heterogene Mischung wickelte sich am Ende um den Rührer. Man erhielt ein klebriges teils vernetztes Polymer, das weder in Toluol, Aceton oder Methanol gelöst werden konnte.

### Vergleichsbeispiel 2 (nicht erfindungsgemäß):

In einem 250ml-4-Halskolben mit magnetgekoppeltem Rührer, Thermofühler und Destillationsbrücke wurden 120 g (= 0,035 mol Amin) eines aminopropyl-funktionellen Polysiloxans der mittleren Formel ViSiMe₂O_{1/2} : Me₂SiO_{2/2} : MeSi (CH₂CH₂CH₂-NH₂) O_{2/2} = 2 : 46,1 : 1,1 vorgelegt und 4,9 g (= 0,035 mol) Phenylcarbamat (C₆H₅-0-C(=O)-NH₂, 98%, Aldrich) zugefügt. Unter Rühren wurde die weiße Suspension unter Anlegen von 2 hPa Ölpumpenvakuum rasch auf 80°C aufgeheizt. Der Feststoff löste sich allmählich auf und Phenol schied sich am Kondensator als weißer Feststoff ab. Nach 2h bei 80°C wurde das Vakuum mit Stickstoff gebrochen und von dem klaren, farblosen Öl eine Probe gezogen. Laut ¹H-NMR-Spektrum in CDCl₃ (Referenzsignal des nicht deuterierten Anteils: 7,24 ppm) war der Umsatz der Aminofunktionen quantitativ (Vergleich der Signale der entsprechenden CH₂-N-Gruppen: Amin: 2,63 ppm, Harnstoff: 3,12 ppm). Es wurde anschließend bei 2 hPa auf 100°C aufgeheizt und eine halbe Stunde unter diesen Bedingungen entflüchtigt. Insgesamt wurden 3,6 g festes Destillat erhalten. Der aus dem ¹H-NMR-Spektrum des Rückstands berechnete Phenolgehalt (¹H-NMR-Spektrum in D6-Aceton: Referenzsignal des nicht deuterierten Anteils: 2,04 ppm) lag bei 0,3 Gew.-% (Signale bei 6,8 ppm, 3H). Der Rückstand wurde anschließend über einen ölbeheizten Labordünnschichtverdampfer bei 120°C/5 mbar/250 Upm mit einem Stickstoffstrom von 2 l/min. und einer Dosiergeschwindigkeit von ca. 1,5 ml/min. ausgeheizt. Man isolierte dabei 115 g eines klaren farblosen Öls und 0,7 g Destillat. Die Hauptverluste entstanden bei den Umfüllvorgängen und durch Anhaftungen im Dünnschichtverdampfer. Aus dem ¹H-NMR-Spektrum ergab sich folgende Zusammensetzung:
ViSiMe₂O_{1/2} : Me₂SiO_{2/2} : MeSi[(CH₂)₃-NHC(O)-NH₂]O_{2/2} = 2 : 46,8 : 1,1.

Daraus errechnet sich ein Harnstoffgehalt von 0,291 mmol/g.

Der aus dem ¹H-NMR-Spektrum des Rückstands berechnete Phenoxy-Si-Gehalt (¹H-NMR-Spektrum in D6-Aceton: Referenzsignal des nicht deuterierten Anteils: 2,04 ppm) lag bei 68 Gew.-ppm (Signalgruppe bei 6,92 ppm, 2H).

### Beispiel 1:

Analog zum Vergleichsbeispiel 1 wurden 90 g des Aminopolysiloxans (0,026 mol Amin) mit 4,5 g (0,027 mol) Carbaminsäure-2-methoxyphenylester (hergestellt aus Guajacol und Chlorsulfonylisocyanat gemäß Singh, R. et al., ACS Catalysis 6(10), 6520-6524 (2016)) 2h bei 80°C und 1 hPa umgesetzt. Laut ¹H-NMR-Spektrum in CDCl₃ (Referenzsignal des nicht deuterierten Anteils: 7,24 ppm) war der Umsatz der Aminfunktionen quantitativ (Vergleich der Signale der entsprechenden CH₂-N-Gruppen: Amin: 2,63 ppm, Harnstoff: 3,12 ppm). Anschließend wurde Ölpumpenvakuum angelegt (4 hPa) und der Rückstand unter Durchleiten eines Stickstoffstroms (2-5 l/h) 30 Minuten bei 130°C ausgeheizt. Man isolierte 82,7 g eines farblosen, klaren Öls als Rückstand und 3,8 g flüssiges Destillat, in dessen ¹H-NMR-Spektrum als Hauptanteil 2-Methoxyphenol (= Guajacol) nachgewiesen wurde (D6-Aceton, Signalgruppen bei 7,5 ppm, 6,8 ppm, 6,9 ppm). Aus dem ¹H-NMR-Spektrum des Rückstands ergab sich folgende Zusammensetzung: ViSiMe₂O_{1/2} : Me₂SiO_{2/2} : MeSi[(CH₂)₃-NHC(O)-NH₂]O_{2/2} = 2 : 47,3 : 1,1 (Vi=Vinylrest, Me=Methylrest).

Oberhalb 6,6 ppm (Bereich der Aryl-Protonen) war kein einziges Signal erkennbar.

### Beispiel 2:

Analog Beispiel 1 wurden 90 g (0,11 mol Amin) eines aminofunktionellen Polysiloxans der mittleren Formel Me₃SiO_{1/2} : Me₂SiO_{2/2} : MeSi (CH₂CH₂CH₂-NH-CH₂CH₂-NH₂)O_{2/2} = 2 : 17,8 : 1,1 mit 22,1 g (= 0,13 mol) Carbaminsäure-2-methoxyphenyl-ester umgesetzt und ausgeheizt. Anhand des ¹H-NMR-Spektrums (CDCl₃) konnte durch das Fehlen der Signale zwischen 2,5 und 2,9 ppm und die neuen Signale zwischen 3,0 und 3,5 ppm der vollständige Umsatz der Aminfunktionen zu den entsprechenden Harnstofffunktionen nachgewiesen werden.

### Beispiel 3:

Analog Beispiel 2 wurden 90 g (0,11 mol Amin) eines aminofunktionellen Polysiloxans der mittleren Formel Me₃SiO_{1/2} : Me₂SiO_{2/2} : MeSi (CH₂CH₂CH₂-NH-CH₂CH₂-NH₂)O_{2/2} = 2 : 17,8 : 1,1 mit 11 g (= 0,065 mol) Carbaminsäure-2-methoxyphenyl-ester umgesetzt und ausgeheizt. Anhand des ¹H-NMR-Spektrums (CDCl₃) konnte aus dem Integralverhältnis der Signale zwischen 2,5 und 2,9 ppm und der neuen Signale zwischen 3,0 und 3,5 ppm ein 48%iger Umsatz der Aminfunktionen zu den entsprechenden Harnstofffunktionen nachgewiesen werden.

### Beispiel 4:

a) Die Arbeitsweise von Beispiel 1 wurde wiederholt mit der Abänderung, dass 146,9 g (= 0,176 mol Amin) des aminopropyl-funktionellen Polysiloxans der mittleren Formel ViSiMe₂O_{1/2} : Me₂SiO_{2/2} : MeSi (CH₂CH₂CH₂-NH₂)O_{2/2} = 2 : 28,4 : 3,2 vorgelegt und mit 34,5 g (0,178 mol) Carbaminsäure-2-methyl-5-(1-methylethyl)phenylester (= Carvacrolcarbamat) umgesetzt wurden. Gemäß dem ¹H-NMR-Spektrum wurde folgendes harnstofffunktionelle Organopolysiloxan mit einem Harnstoffgehalt von 1,14 mmol/g erhalten:
   ViSiMe₂O_{1/2} : Me₂SiO_{2/2} : MeSi [(CH₂)₃-NHC(O)-NH₂]O_{2/2} = 2 : 28,4 : 3,2
b) In Analogie zur Arbeitsweise von Beispiel 4a) wurde ein harnstofffunktionelles Organopolysiloxan mit einem Harnstoffgehalt von 0,652 mmol/g erhalten, das nach dem ¹H-NMR-Spektrum folgende mittlere Formel aufweist:
   ViSiMe₂O_{1/2} : Me₂SiO_{2/2} : MeSi [(CH₂)₃-NHC(O)-NH₂]O_{2/2} = 2 : 166,4 : 9,1.
c) In Analogie zur Arbeitsweise von Beispiel 4a) wurde ein harnstofffunktionelles Organopolysiloxan mit einem Harnstoffgehalt von 0,3 mmol/g erhalten, das nach dem ¹H-NMR-Spektrum folgende mittlere Formel aufweist:
   ViSiMe₂O_{1/2} : Me₂SiO_{2/2} : MeSi[(CH₂)₃-NHC(O)-NH₂]O_{2/2} = 2 : 159,3 : 3,7.
d) In Analogie zur Arbeitsweise von Beispiel 4a) wurde ein harnstofffunktionelles Organopolysiloxan mit einem Harnstoffgehalt von 0,282 mmol/g erhalten, das nach dem ¹H-NMR-Spektrum folgende mittlere Formel aufweist:
   ViSiMe₂O_{1/2} : Me₂SiO_{2/2} : MeSi[(CH₂)₃-NHC(O)-NH₂]O_{2/2} = 2 : 48 : 1,1.

### Beispiel 5: Bestimmung der Temperaturabhängigkeit der Viskosität der harnstofffunktionellen Organopolysiloxane

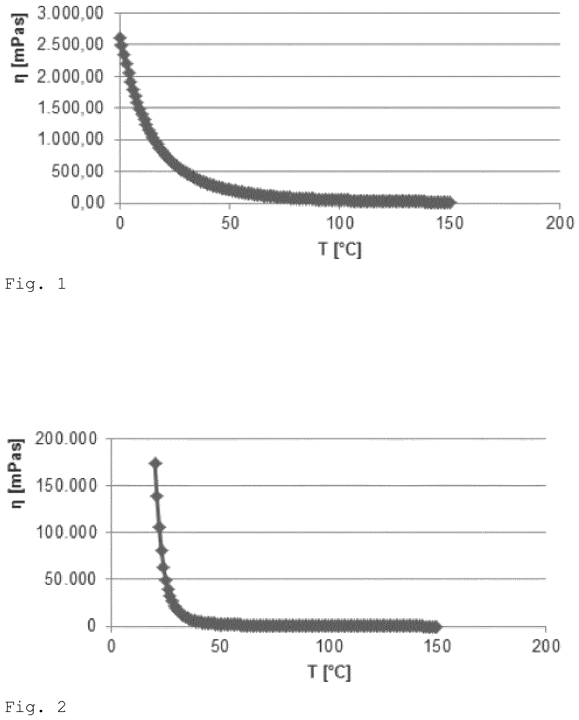

Die Temperaturabhängigkeit der Viskosität der harnstoff-funktionellen Organopolysiloxane wurde bestimmt und für Beispiel 4a) in Fig. 1 und Beispiel 4d) in Fig. 2 graphisch dargestellt.

Weiterhin wurde der Viskosität/Temperatur-Koeffizient für die harnstofffunktionellen Organopolysiloxane der Beispiele 4a) bis 4d) bestimmt. Als Vergleich dienten Dimethylpolysiloxane mit einer Viskosität von ca. 33 bis ca. 340 mPa.s bei 25°C (WACKER® AK 35 Siliconöl - WACKER® AK 350 Siliconöl) und einer Viskosität von mehr als ca. 485 mPa.s bei 25°C (WACKER® AK 500 Siliconöl). Die Ergebnisse sind in den Tabellen 1 und 2 zusammengefasst.

Bei der temperaturabhängigen Messung wurde am Rheometer MCR301 von Anton Paar mit 1K/min. von 20°C auf 150°C aufgeheizt und mit konstantem Schergefälle von 1/s die Schubspannung bei jedem Grad gemessen und in die Viskosität umgerechnet. Als Software wurde Rheoplus/32 von Anton Paar eingesetzt.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP25-2 bzw. CP50-2) mit einem Öffnungswinkel von 2° und dem unten genannten Kegelabstand a verwendet wurde.

Für die temperaturabhängige Messung wurde mit 1K/min. von 20°C auf 150°C aufgeheizt und mit konstantem Schergefälle von 1/s die Schubspannung bei jedem Grad gemessen und in die Viskosität umgerechnet. Als Software wurde Rheoplus/32 von Anton Paar eingesetzt.

Die Messanordnung im Einzelnen:
Beispiel 4a) und 4b): CP25-2, a = 0,047 mm
Beispiel 4c) und 4d): CP50-2, a = 0,048 mm

Die Messbedingungen ergaben sich aus dem linearen Bereich der Fließkurven bei 20°C.

**Tabelle 1: Temperaturabhängigkeit der Viskosität der Harnstoff-Siloxane**

| Beisp. | Aminosiloxan v [mm²/s] (25°C) | Harnstoff-Siloxan µ [mPa.s] (25°C) | Kettenlänge | Harnstoff-Gehalt [mmol/g] | Visko/T Koeff.¹⁾ | Viskoabnahme zw. 38° u. 99°C |
|---|---|---|---|---|---|---|
| B 4a) | 51 | 50.000 | 32,6 | 1,14 | 0,96 | 96% |
| B 4b) | 500 | 42.000 | 177,5 | 0,652 | 0,93 | 93% |
| B 4c) | 685 | 12.500 | 165 | 0,3 | 0,90 | 90% |
| B 4d) | 66 | 600 | 51 | 0,282 | 0,86 | 86% |

| | | | | | | |
|---|---|---|---|---|---|---|
| ¹⁾ Viskosität/Temperatur Koeffizient = 1 - v(99°C)/ v(38°C) | | | | | | |

**Tabelle 2: Vergleich zur Temperaturabhängigkeit der Viskosität von Dimethylpolysiloxanen**

| Vergl. | - | Viskosität µ [mPa.s] (25°C) | Kettenlänge | - | Visko/T Koeff.¹⁾ | Viskoabnahme zw. 38° u. 99°C |
|---|---|---|---|---|---|---|
| AK35²⁾ - AK350³⁾ | - | 33 - 340 | 30 - 130 | - | 0,585 - 0,595 | ≈59% |
| >AK500⁴⁾ | - | > 485 | > 155 | - | 0,60 | 60% |

| | | | | | | |
|---|---|---|---|---|---|---|
| ¹⁾ Viskosität/Temperatur Koeffizient = 1 - v(99°C)/ v(38°C) ²⁾ Dimethylpolysiloxan, WACKER® AK 35 Siliconöl, käuflich erwerblich bei der Wacker Chemie AG, München ³⁾ Dimethylpolysiloxan, WACKER® AK 350 Siliconöl, käuflich erwerblich bei der Wacker Chemie AG, München ⁴⁾ Dimethylpolysiloxan, WACKER® AK 500 Siliconöl, käuflich erwerblich bei der Wacker Chemie AG, München | | | | | | |

Tabelle 1 zeigt, dass mit zunehmender Harnstoffkonzentration in den erfindungsgemäßen harnstofffunktionellen Siloxanen der Viskosität/Temperatur-Koeffizient steigt von 0,86 auf 0,96, d.h. die Viskositätsabnahme zwischen 38°C und 99°C von 86% auf 96% zunimmt. Im Vergleich dazu zeigt Tabelle 2, dass der Viskosität/Temperatur-Koeffizient bei Dimethylpolysiloxanen mit ähnlicher Kettenlänge deutlich kleiner ist und bei ca. 0,6 liegt, die Viskositätsabnahme damit deutlich geringer ist und bei ca. 60% liegt.

## Patentansprüche

1. Verfahren zur Herstellung von harnstofffunktionellen Organopolysiloxanen aus Einheiten der Formel (I)
**RₙSiO_{(4-n)/2}** (I)
wobei
**R** einen Rest **R¹** oder einen Rest **-OR²** oder einen Rest **Q** bedeutet,
**R¹** einen einwertigen gegebenenfalls halogenierten Kohlenwasserstoffrest mit 1 bis 18 C-Atomen bedeutet,
**R²** ein Wasserstoffatom oder einen einwertigen C₁-C₆-Kohlenwasserstoffrest bedeutet,
**Q** ein harnstofffunktioneller Rest der Formel (II) ist
**-R⁵-[NR⁴-R⁶-]ₓNR⁴R³** (II),
wobei
**R³** ein Wasserstoffatom oder einen einwertigen C₁-C₆-Kohlenwasserstoffrest, vorzugsweise ein Wasserstoffatom, bedeutet,
**R⁴** gleich oder verschieden ist und einen Rest **R⁴'** oder einen Rest **R^{u}** bedeutet, wobei
**R⁴'** ein Wasserstoffatom oder einen einwertigen C₁-C₆-Kohlenwasserstoffrest bedeutet,
**R^{u}** ein Rest der Formel (III) ist
**-C(=O)-NH₂** (III)
**R⁵** einen zweiwertigen C₁-C₁₈-Kohlenwasserstoffrest, vorzugsweise einen zweiwertigen C₂-C₄-Kohlenwasserstoffrest, bedeutet,
**R⁶** einen zweiwertigen C₁-C₁₈-Kohlenwasserstoffrest, vorzugsweise einen zweiwertigen C₂-C₄-Kohlenwasserstoffrest, bedeutet,
**x** 0, 1 oder 2 ist und
**n** 0, 1, 2 oder 3 ist und vorzugsweise durchschnittlich 2,00 bis 2,66 ist,
mit der Maßgabe, dass in den Organopolysiloxanen aus Einheiten der Formel (I) mindestens ein harnstofffunktioneller Rest **Q**, der einen Rest **R^{u}** aufweist, pro Molekül enthalten ist,
indem aminofunktionelle Organopolysiloxane aus Einheiten der Formel (IV)
**R'ₙSiO_{(4-n)/2}** (IV),
wobei
**R'** einen Rest **R¹** oder einen Rest **-OR²** oder einen Rest **A** bedeutet,
**R¹, R²** und **n** die oben dafür angegebene Bedeutung haben und
**A** ein aminofunktioneller Rest der Formel (V) ist
**-R⁵-[NR⁴'-R⁶-]ₓNR⁴'R³** (V),
wobei
**R³, R⁴', R⁵, R⁶** und **x** die oben dafür angegebene Bedeutung haben,
mit der Maßgabe, dass in den Organopolysiloxanen aus Einheiten der Formel (IV) mindestens ein aminofunktioneller Rest **A** pro Molekül enthalten ist,
mit ortho-substituierten Carbaminsäurearylestern der Formel (VI)
**R⁷-Ar-O-C(=O)-NH₂** VI),
wobei
**Ar** einen ortho-substituierten Arylrest, vorzugsweise einen ortho-substituierten Phenylrest, bedeutet, wobei Ar neben dem ortho-Substituent **R⁷** noch weitere Substituenten in ortho'-, meta- oder para-Position enthalten kann, und
**R⁷** der an Ar gebundene ortho-Substituent ist, wobei **R⁷** einen C₁-C₆-Alkylrest, einen C₁-C₆-Carboxalkylrest, einen C₁-C₆-Alkoxyrest oder einen Halogenrest bedeutet,
umgesetzt werden.

2. Verfahren nach Anspruch 1, **dadurch gekennzeichnet, dass** bei den harnstofffunktionellen Organopolysiloxanen aus Einheiten der Formel (I)
mindestens 50 % aller Reste **R** einen C₁-C₆-Alkylrest **R¹** bedeuten,
mindestens 0,1 % aller Reste **R** einen Rest **Q** der Formel (II) bedeuten, wobei in mindestens einem Rest **Q** mindestens ein Rest **R⁴** die Bedeutung von **R^{u}** hat, und
höchstens 3 % aller Reste **R** einen Rest **-OR²** bedeuten,
wobei Q, R, R¹, R², R⁴ und R^{u} die in Anspruch 1 dafür angegebene Bedeutung haben.

3. Verfahren nach Anspruch 1 oder 2, **dadurch gekennzeichnet, dass** die harnstofffunktionellen Organopolysiloxane aus Einheiten der Formel (I) mindestens 3 Si-Atome und höchstens 2000 Si-Atome enthalten.

4. Verfahren nach Anspruch 1, 2 oder 3, **dadurch gekennzeichnet, dass** bei den eingesetzten aminofunktionellen Organopolysiloxanen aus Einheiten der Formel (IV) mindestens 50 % aller Reste **R** einen C₁-C₆-Alkylrest **R¹** bedeuten,
mindestens 0,1 % aller Reste **R** einen Rest **A** der Formel (V) bedeuten und
höchstens 3 % aller Reste **R** einen Rest **-OR²** bedeuten,
wobei A, R, R¹ und R² die in Anspruch 1 dafür angegebene Bedeutung haben.

5. Verfahren nach einem der Ansprüche 1 bis 4, **dadurch gekennzeichnet, dass** die eingesetzten aminofunktionellen Organopolysiloxane aus Einheiten der Formel (IV) mindestens 3 Si-Atome und höchstens 2000 Si-Atome enthalten.

6. Verfahren nach einem der Ansprüche 1 bis 5, **dadurch gekennzeichnet, dass** die harnstofffunktionellen Organopolysiloxane aus Einheiten der Formel (I) Organopolysiloxane der Formel (VII)
QₖR*₃₋ₖSiO(R¹₂SiO)ₘ(QR*SiO)ₚSiR*₃₋ₖQₖ (VII)
sind, wobei
**R*** einen Rest **R¹** oder einen Rest **-OR²** bedeutet,
**R¹** und **R²** die oben dafür angegebene Bedeutung haben,
**Q** ein harnstofffunktioneller Rest der Formel (II) ist
**-R⁵-[NR⁴-R⁶-]ₓNR⁴R³** (II),
wobei
**R³** ein Wasserstoffatom oder einen einwertigen C₁-C₆-Kohlenwasserstoffrest, vorzugsweise ein Wasserstoffatom, bedeutet,
**R⁴** gleich oder verschieden ist und einen Rest **R⁴'** oder einen Rest **R^{u}** bedeutet, wobei
**R⁴'** ein Wasserstoffatom oder einen einwertigen C₁-C₆-Kohlenwasserstoffrest bedeutet und
**R^{u}** ein Rest der Formel (III) ist
**-C(=O)-NH₂** (III),
**R⁵** einen zweiwertigen C₁-C₁₈-Kohlenwasserstoffrest, vorzugsweise einen zweiwertigen C₂-C₄-Kohlenwasserstoffrest, bedeutet,
**R⁶** einen zweiwertigen C₁-C₁₈-Kohlenwasserstoffrest, vorzugsweise einen zweiwertigen C₂-C₄-Kohlenwasserstoffrest, bedeutet,
**k** 0 oder 1 ist,
**m** 0 oder eine ganze Zahl von 1 bis 1000 ist,
**p** 0 oder eine ganze Zahl von 1 bis 50 ist und
**x** 0, 1 oder 2 ist,
mit der Maßgabe, dass in den Organopolysiloxanen der Formel (VII) mindestens ein harnstofffunktioneller Rest **Q**, der einen Rest **R^{u}** aufweist, pro Molekül enthalten ist.

7. Verfahren nach einem der Ansprüche 1 bis 6, **dadurch gekennzeichnet, dass** die harnstofffunktionellen Reste **Q** der Formel (II) solche der Formel
-CH₂-CH₂-CH₂-NH-C(=O)-NH₂,
-CH₂-CH₂-CH₂-NH-CH₂-CH₂-NH-C(=O)-NH₂,
-CH₂-CH₂-CH₂-N[-C(=O)-NH₂]-CH₂-CH₂-NH-C(=O)-NH₂
und
-CH₂-CH₂-CH₂-N[-C(=O)-NH₂]-CH₂-CH₂-NH₂
sind.

8. Verfahren nach einem der Ansprüche 1 bis 7, **dadurch gekennzeichnet, dass** als aminofunktionelle Organopolysiloxane aus Einheiten der Formel (IV) Organopolysiloxane der Formel (VIII)
AₗR*₃₋ₗSiO(R¹₂SiO)ₒ(AR*SiO)_{q}SiR*₃₋ₗAₗ (VIII)
eingesetzt werden, wobei
**R*** und **R¹** die in Anspruch 6 dafür angegebene Bedeutung haben,
**A** ein aminofunktioneller Rest der Formel (V) ist
**-R⁵-[NR⁴'-R⁶-]ₓNR⁴'R³** (V),
wobei
**R³**, **R⁴'**, **R⁵, R**⁶ und **x** die in Anspruch 6 dafür angegebene Bedeutung haben,
**l** 0 oder 1 ist,
**o** 0 oder eine ganze Zahl von 1 bis 1000 ist,
**q** 0 oder eine ganze Zahl von 1 bis 50 ist
mit der Maßgabe, dass in den Organopolysiloxanen der Formel (VIII) mindestens ein aminofunktioneller Rest **A** pro Molekül enthalten ist.

9. Verfahren nach einem der Ansprüche 1 bis 8, **dadurch gekennzeichnet, dass** als aminofunktionelle Reste **A** der Formel (V) Reste der Formel
-CH₂-CH₂-CH₂-NH₂
und
-CH₂-CH₂-CH₂-NH-CH₂-CH₂-NH₂
eingesetzt werden.

10. Verfahren nach einem der Ansprüche 1 bis 9, **dadurch gekennzeichnet, dass** als Carbaminsäurearylester der Formel (VI)
2-Methylphenol (=o-Kresol),
2-(1-Methylethyl)-5-methylphenol (= Thymol),
2-Methyl-5-(1-methylethyl)-phenol (= Carvacrol),
2-Ethylphenol,
2-Methoxyphenol (= Guajacol),
2-Chlorphenol,
2-Hydroxybenzoesäuremethylester (= Methylsalicylat) oder
2-Hydroxybenzoesäureethylester (= Ethylsalicylat) eingesetzt werden.

## Claims

1. Process for preparing urea-functional organopolysiloxanes made up of units of the formula (I)
**RₙSiO_{(4-n)/2}** (I)
where
**R** is a radical **R¹** or a radical **-OR²** or a radical **Q**,
**R¹** is a monovalent optionally halogenated hydrocarbon radical having from 1 to 18 carbon atoms,
**R²** is a hydrogen atom or a monovalent C₁-C₆-hydrocarbon radical,
**Q** is a urea-functional radical of the formula (II)
**-R⁵-[NR⁴-R⁶-]ₓNR⁴R³** (II),
where
**R³** is a hydrogen atom or a monovalent C₁-C₆-hydrocarbon radical, preferably a hydrogen atom,
the radicals **R⁴** are identical or different and are each a radical **R⁴'** or a radical **R^{u}**, where
**R⁴'** is a hydrogen atom or a monovalent C₁-C₆-hydrocarbon radical,
**R^{u}** is a radical of the formula (III)
**-C(=O)-NH₂** (III)
**R⁵** is a divalent C₁-C₁₈-hydrocarbon radical, preferably a divalent C₂-C₄-hydrocarbon radical,
**R⁶** is a divalent C₁-C₁₈-hydrocarbon radical, preferably a divalent C₂-C₄-hydrocarbon radical,
**x** is 0, 1 or 2 and
**n** is 0, 1, 2 or 3 and preferably on average from 2.00 to 2.66,
with the proviso that at least one urea-functional radical **Q**, which has a radical **R^{u}** is present per molecule in the organopolysiloxanes made up of units of the formula (I),
by reacting amino-functional organopolysiloxanes made up of units of formula (IV)
**R'ₙSiO_{(4-n)/2}** (IV),
where
**R'** is a radical **R¹** or a radical **-OR²** or a radical **A**,
**R¹**, **R²** and **n** are as defined above and
**A** is an amino-functional radical of the formula (V)
**-R⁵-[NR⁴'-R⁶-]ₓNR⁴'R³** (V),
where
**R³**, **R⁴'**, **R⁵**, **R⁶** and **x** are as defined above,
with the proviso that at least one amino-functional radical **A** is present per molecule in the organopolysiloxanes made up of units of formula (IV), with ortho-substituted aryl carbamates of the formula (VI)
**R⁷-Ar-O-C(=O)-NH₂** (VI),
where
**Ar** is an ortho-substituted aryl radical, preferably an ortho-substituted phenyl radical, where Ar can contain further substituents in the ortho', meta or para position in addition to the ortho substituent **R⁷**, and
**R⁷** is the ortho substituent bound to Ar, where **R⁷** is a C₁-C₆-alkyl radical, a C₁-C₆-carboxalkyl radical, a C₁-C₆-alkoxy radical or a halogen radical.

2. Process according to Claim 1, **characterized in that**, in the urea-functional organopolysiloxanes made up of units of the formula (I)
at least 50% of all radicals **R** are a C₁-C₆-alkyl radical **R¹**,
at least 0.1% of all radicals **R** are a radical **Q** of the formula (II), where at least one radical **R⁴** in at least one radical **Q** is **R^{u}**, and
not more than 3% of all radicals **R** are a radical - **OR²**,
where Q, R, R¹, R², R⁴ and R^{u} are as defined in Claim 1.

3. Process according to Claim 1 or 2, **characterized in that** the urea-functional organopolysiloxanes made up of units of the formula (I) contain at least 3 Si atoms and not more than 2000 Si atoms.

4. Process according to Claim 1, 2 or 3, **characterized in that**, in the amino-functional organopolysiloxanes made up of units of the formula (IV) which are used, at least 50% of all radicals **R** are a C₁-C₆-alkyl radical **R¹**,
at least 0.1% of all radicals **R** are a radical **A** of the formula (V) and
not more than 3% of all radicals **R** are a radical - **OR²**,
where A, R, R¹ and R² are as defined in Claim 1.

5. Process according to any of Claims 1 to 4, **characterized in that** the amino-functional organopolysiloxanes made up of units of formula (IV) which are used contain at least 3 Si atoms and not more than 2000 Si atoms.

6. Process according to any of Claims 1 to 5, **characterized in that** the urea-functional organopolysiloxanes made up of units of the formula (I) are organopolysiloxanes of the formula (VII)
QₖR*₃₋ₖSiO(R¹₂SiO)ₘ(QR*SiO)ₚSiR*₃₋ₖQₖ (VII)
where
**R*** is a radical **R¹** or a radical **-OR²**,
**R¹** and **R²** are as defined above,
**Q** is a urea-functional radical of the formula (II)
**-R⁵-[NR⁴-R⁶-]ₓNR⁴R³** (II),
where
**R³** is a hydrogen atom or a monovalent C₁-C₆-hydrocarbon radical, preferably a hydrogen atom,
the radicals **R⁴** are identical or different and are each a radical **R⁴'** or a radical **R^{u}**, where
**R⁴'** is a hydrogen atom or a monovalent C₁-C₆-hydrocarbon radical and
**R^{u}** is a radical of the formula (III)
**-C(=O)-NH₂** (III),
**R⁵** is a divalent C₁-C₁₈-hydrocarbon radical, preferably a divalent C₂-C₄-hydrocarbon radical,
**R⁶** is a divalent C₁-C₁₈-hydrocarbon radical, preferably a divalent C₂-C₄-hydrocarbon radical,
**k** is 0 or 1,
**m** is 0 or an integer from 1 to 1000,
**p** is 0 or an integer from 1 to 50 and
**x** is 0, 1 or 2,
with the proviso that at least one urea-functional radical **Q**, which has a radical **R^{u}** is present per molecule in the organopolysiloxanes of the formula (VII) .

7. Process according to any of Claims 1 to 6, **characterized in that** the urea-functional radicals **Q** of the formula (II) are radicals of the formula
-CH₂-CH₂-CH₂-NH-C(=O)-NH₂,
-CH₂-CH₂-CH₂-NH-CH₂-CH₂-NH-C(=O)-NH₂,
-CH₂-CH₂-CH₂-N[-C(=O)-NH₂]-CH₂-CH₂-NH-C(=O)-NH₂
and
-CH₂-CH₂-CH₂-N[-C(=O)-NH₂]-CH₂-CH₂-NH₂.

8. Process according to any of Claims 1 to 7, **characterized in that** organopolysiloxanes of the formula (VIII)
A₁R*₃₋₁SiO(R¹₂SiO)ₒ(AR*SiO)_{q}SiR*₃₋₁A₁ (VIII),
where
**R*** and **R¹** are as defined in Claim 6,
**A** is an amino-functional radical of the formula (V)
**-R⁵-[NR⁴'-R⁶-]ₓNR⁴'R³** (V),
where
**R³**, **R⁴'**, **R⁵**, **R⁶** and **x** are as defined in Claim 6,
**1** is 0 or 1,
**o** is 0 or an integer from 1 to 1000,
**q** is 0 or an integer from 1 to 50,
with the proviso that at least one amino-functional radical **A** is present per molecule in the organopolysiloxanes of the formula (VIII),
are used as amino-functional organopolysiloxanes made up of units of the formula (IV).

9. Process according to any of Claims 1 to 8, **characterized in that** radicals of the formula
-CH₂-CH₂-CH₂-NH₂
and
-CH₂-CH₂-CH₂-NH-CH₂-CH₂-NH₂
are used as amino-functional radicals **A** of the formula (V).

10. Process according to any of Claims 1 to 9, **characterized in that**
2-methylphenol (= o-cresol),
2-(1-methylethyl)-5-methylphenol (= thymol),
2-methyl-5-(1-methylethyl)phenol (= carvacrol),
2-ethylphenol,
2-methoxyphenol (= guaiacol),
2-chlorophenol,
methyl 2-hydroxybenzoate (= methyl salicylate) or
ethyl 2-hydroxybenzoate (= ethyl salicylate) is used as aryl carbamate of the formula (VI).

## Revendications

1. Procédé pour la préparation d'organopolysiloxanes fonctionnalisés par urée composés de motifs de formule (I)
**RₙSiO_{(4-n)/2}** (I)
R signifiant un radical R¹ ou un radical -OR² ou un radical Q,
R¹ signifiant un radical hydrocarboné monovalent éventuellement halogéné comportant 1 à 18 atome(s) de C,
R² signifiant un atome d'hydrogène ou un radical hydrocarboné monovalent en C₁₋₆,
Q étant un radical de formule (II) fonctionnalisé par urée
**-R⁵-[NR⁴-R⁶-]ₓNR⁴R³** (II),
R³ signifiant un atome d'hydrogène ou un radical hydrocarboné monovalent en C₁₋₆, de préférence un atome d'hydrogène,
R⁴ étant identique ou différent et signifiant un radical R⁴' ou un radical R^{u},
R⁴' signifiant un atome d'hydrogène ou un radical hydrocarboné monovalent en C₁₋₆,
R^{u} étant un radical de formule (III)
**-C(=O)-NH₂** (III)
R⁵ signifiant un radical hydrocarboné divalent en C₁₋₁₈, de préférence un radical hydrocarboné divalent en C₂₋₄,
R⁶ signifiant un radical hydrocarboné divalent en C₁₋₁₈, de préférence un radical hydrocarboné divalent en C₂₋₄,
x étant 0, 1 ou 2 et
n étant 0, 1, 2 ou 3 et étant de préférence en moyenne 2,00 à 2,66,
étant entendu que dans les organopolysiloxanes composés de motifs de formule (I), au moins un radical Q fonctionnalisé par urée, qui présente un radical R^{u}, est contenu par molécule,
par le fait que des organopolysiloxanes fonctionnalisés par amino composés de motifs de formule (IV)
**R'ₙSiO_{(4-n)/2}** (IV),
R' signifiant un radical R¹ ou un radical -OR² ou un radical A,
R¹, R² et n possédant la signification mentionnée ci-dessus pour ceux-ci et
A étant un radical de formule (V) fonctionnalisé par amino
**-R⁵-[NR⁴'-R⁶-]ₓNR⁴**'**R³** (V),
R³, R⁴', R⁵, R⁶ et x possédant la signification mentionnée ci-dessus pour ceux-ci,
étant entendu que dans les organopolysiloxanes composés de motifs de formule (IV), au moins un radical A fonctionnalisé par amino est contenu par molécule,
sont transformés avec des esters d'aryle substitués en ortho d'acides carbamiques de formule (VI)
**R⁷-Ar-O-C(=O)-NH₂** VI),
Ar signifiant un radical aryle substitué en ortho, de préférence un radical phényle substitué en ortho, Ar pouvant contenir, outre le substituant en ortho R⁷, encore d'autres substituants en position ortho', méta ou para, et
R⁷ étant le substituant en ortho lié à Ar, R⁷ signifiant un radical C₁₋₆-alkyle, un radical C₁₋₆-carboxalkyle, un radical C₁₋₆-alcoxy ou un radical halogéné.

2. Procédé selon la revendication 1, **caractérisé en ce que** dans les organopolysiloxanes fonctionnalisés par urée composés de motifs de formule (I) au moins 50 % de tous les radicaux R signifient un radical R¹ C₁₋₆-alkyle,
au moins 0,1 % de tous les radicaux R signifient un radical Q de formule (II), où dans au moins un radical Q, au moins un radical R⁴ possède la signification de R^{u}, et
au plus 3 % de tous les radicaux R signifient un radical -OR²,
Q, R, R¹, R², R⁴ et R^{u} possédant la signification mentionnée pour ceux-ci dans la revendication 1.

3. Procédé selon la revendication 1 ou 2, **caractérisé en ce que** les organopolysiloxanes fonctionnalisés par urée composés de motifs de formule (I) contiennent au moins 3 atomes de Si et au plus 2 000 atomes de Si.

4. Procédé selon la revendication 1, 2 ou 3, **caractérisé en ce que** dans les organopolysiloxanes fonctionnalisés par amino composés de motifs de formule (IV) utilisés,
au moins 50 % de tous les radicaux R signifient un radical R¹ C₁₋₆-alkyle,
au moins 0,1 % de tous les radicaux R signifient un radical A de formule (V), et
au plus 3 % de tous les radicaux R signifient un radical -OR²,
A, R, R¹ et R² possédant la signification mentionnée pour ceux-ci dans la revendication 1.

5. Procédé selon l'une quelconque des revendications 1 à 4, caractérisé les organopolysiloxanes fonctionnalisés par amino composés de motifs de formule (IV) utilisés contiennent au moins 3 atomes de Si et au plus 2 000 atomes de Si.

6. Procédé selon l'une quelconque des revendications 1 à 5, **caractérisé en ce que** les organopolysiloxanes fonctionnalisés par urée composés de motifs de formule (I) sont des organopolysiloxanes de formule (VII)
QₖR*₃₋ₖSiO(R¹₂SiO)ₘ(QR*SiO)ₚSiR*₃₋ₖQₖ (VII),
R* signifiant un radical R¹ ou un radical -OR²,
R¹ et R² possédant la signification mentionnée ci-dessus pour ceux-ci,
Q étant un radical de formule (II) fonctionnalisé par urée
**-R⁵-[NR⁴-R⁶-]ₓNR⁴R³** (II),
R³ signifiant un atome d'hydrogène ou un radical hydrocarboné monovalent en C₁₋₆, de préférence un atome d'hydrogène,
R⁴ étant identique ou différent et signifiant un radical R⁴' ou un radical R^{u},
R⁴' signifiant un atome d'hydrogène ou un radical hydrocarboné monovalent en C₁₋₆,
R^{u} étant un radical de formule (III)
**-C(=O)-NH₂** (III),
R⁵ signifiant un radical hydrocarboné divalent en C₁₋₁₈, de préférence un radical hydrocarboné divalent en C₂₋₄,
R⁶ signifiant un radical hydrocarboné divalent en C₁₋₁₈, de préférence un radical hydrocarboné divalent en C₂₋₄,
k étant 0 ou 1
m étant 0 ou un nombre entier de 1 à 1 000,
p étant 0 ou un nombre entier de 1 à 50 et
x étant 0, 1 ou 2,
étant entendu que dans les organopolysiloxanes de formule (VII), au moins un radical Q fonctionnalisé par urée, qui présente un radical R^{u}, est contenu par molécule.

7. Procédé selon l'une quelconque des revendications 1 à 6, **caractérisé en ce que** les radicaux Q de formule (II) fonctionnalisés par urée sont ceux de formule
-CH₂-CH₂-CH₂-NH-C(=O)-NH₂,
-CH₂-CH₂-CH₂-NH-CH₂-CH₂-NH-C(=O)-NH₂,
-CH₂-CH₂-CH₂-N[-C(=O)-NH₂]-CH₂-CH₂-NH-C(=O)-NH₂
et
-CH₂-CH₂-CH₂-N[-C(=O)-NH₂]-CH₂-CH₂-NH₂.

8. Procédé selon l'une quelconque des revendications 1 à 7, **caractérisé en ce que** des organopolysiloxanes de formule (VIII)
AₗR*₃₋ₗSiO(R¹₂SiO)ₒ(AR*SiO)_{q}SiR*₃₋ₗAₗ (VIII)
sont utilisés en tant qu'organopolysiloxanes fonctionnalisés par amino composés de motifs de formule (IV),
R* et R¹ possédant la signification mentionnée pour ceux-ci dans la revendication 6,
A étant un radical de formule (V) fonctionnalisé par amino
**-R⁵-[NR⁴'-R⁶-]ₓNR⁴'R³** (V),
R³, R⁴', R⁵, R⁶ et x possédant la signification mentionnée pour ceux-ci dans la revendication 6,
l étant 0 ou 1,
o étant 0 ou un nombre entier de 1 à 1 000,
q étant 0 ou un nombre entier de 1 à 50
étant entendu que dans les organopolysiloxanes de formule (VIII) au moins un radical A fonctionnalisé par amino est contenu par molécule.

9. Procédé selon l'une quelconque des revendications 1 à 8, **caractérisé en ce que** des radicaux de formule
-CH₂-CH₂-CH₂-NH₂
et
-CH₂-CH₂-CH₂-NH-CH₂-CH₂-NH₂
sont utilisés en tant que radicaux A de formule (V) fonctionnalisés par amino.

10. Procédé selon l'une quelconque des revendication 1 à 9, **caractérisé en ce que**
du 2-méthylphénol (= o-crésol),
du 2-(1-méthyléthyl)-5-méthylphénol (= thymol),
du 2-méthyl-5-(1-méthyléthyl)-phénol (= carvacrol),
du 2-éthylphénol,
du 2-méthoxyphénol (= gaïacol),
du 2-chlorophénol,
du 2-hydroxybenzoate de méthyle (= salicylate de méthyle) ou
du 2-hydroxybenzoate d'éthyle (= salicylate d'éthyle) sont utilisés en tant qu'ester d'aryle d'acide carbamique de formule (VI).
